# NEUE EUROPÄISCHE PATENTSCHRIFT

(11) **EP 1 401 930 B2**
(45) Veröffentlichungstag und Bekanntmachung des Hinweises auf die Entscheidung über den Einspruch: **22.02.2017**
(45) Hinweis auf die Patenterteilung: 17.12.2008
(21) Anmeldenummer: 02730162.1
(22) Anmeldetag: 16.04.2002
(51) Int. Cl.: C08J 9/14, C08J 9/00, C08L 75/04

(54) **NICHTBRENNBARE POLYESTERPOLYOL- UND/ODER POLYETHERPOLYOLVORMISCHUNG ZUR HERSTELLUNG VON SCHAUMPRODUKTEN**
NON-COMBUSTIBLE POLYESTERPOLYOL AND/OR POLYETHERPOLYOL PREBLEND FOR PRODUCING FOAMED PRODUCTS
PREMELANGE NON INFLAMMABLE DE POLYOLS DE POLYESTER ET/OU DE POLYOLS DE POLYETHER PERMETTANT DE PRODUIRE DES PRODUITS ALVEOLAIRES

(30) Priorität: 16.05.2001 DE 10123604
(43) Veröffentlichungstag der Anmeldung: 31.03.2004
(73) Patentinhaber: Solvay Fluor GmbH, 30173 Hannover (DE)
(72) Erfinder: ZIPFEL, Lothar, 30880 Laatzen (DE); BÖRNER, Karsten, 31319 Sehnde (DE); RECKE, Dierk-Ingolf, 31515 Wunstorf (DE)
(74) Vertreter: Vande Gucht, Anne
(86) Internationale Anmeldenummer: PCT/EP2002/004185
(87) Internationale Veröffentlichungsnummer: WO 2002/092676

(56) Entgegenhaltungen:
- DE-A- 19 822 944
- US-A- 4 454 251
- US-A- 6 080 799

## Beschreibung

Die vorliegende Erfindung betrifft die Verwendung von nichtbrennbare Polyesterpolyol- und/oder Polyetherpolyolvormischungen zur Herstellung von Schaumstoffen, insbesondere von Polyurethanschaumprodukten.

Polyurethanschäume werden durch Umsetzung von Isocyanaten mit einem Polyol oder einer Polyolmischung in Gegenwart von Treibmittel, vorzugsweise Hydrofluoralkanen hergestellt.

Die deutsche Offenlegungsschrift DE 19822944 A1 offenbart Treibmittel zur Herstellung von Polyurethänschäumen. Das Treibmittel enthält Pentafluorpropan und/oder Pentafluorbutan sowie mindestens ein weiteres Treibmittel. Dieses wird aus einer Gruppe von Verbindungen ausgewählt, welche gegebenenfalls halogenierte Kohlenwasserstoffe, Ether und Halogenether umfasst. Es werden einige Fluorkohlenwasserstoffe genannt, u.a. 1,1,1,2-Tetrafluorethan, 1,1,1,2,3,3,3-Heptafluorpropan und 1,1,1,3,3-Pentafluorpropan. Als geeignete Flammschutzmittel werden, neben bromierten Polyolen, organische Phosphorverbindungen erwähnt,beispielsweise Phosphatester und Phosphonester. Diese weisen organische Gruppen auf, die auch durch ein oder mehrere Halogenatome substitutiert sein können. Vormischungen, die Polyol, ein Treibmittel und eine Phosphorverbindung enthalten, werden nicht erwähnt.

Die Verwendung von 1,1,1,3,3-Pentafluorbutan (HFC365mfc) als Treibmittel zur Herstellung von Polyurethanschaumstoffen ist bekannt. Da 1,1,1,3,3-Pentafluorbutan einen Flammpunkt unter-27 °C besitzt, gilt es als leicht entzündliche Flüssigkeit und seiner Verwendung als Treibmittel sind Grenzen gesetzt. Üblicherweise wird daher 1,1,1,3,3-Pentafluorbutan im Gemisch mit anderen Fluorkohlenwasserstoffen eingesetzt.

Bekannte Treibmittelmischungen enthalten neben HFC365mfc z.B. 1,1,1,2-Tetrafluorethan (HFC-134a) oder 1,1,1,2,3,3,3-Heptafluorpropan (HFC 227ea) oder 1,1,1,3,3-Pentafluorpropan (HFC 245fa). Diese Treibmittelgemische haben keinen Flammpunkt und eignen sich zur Herstellung von geschäumten Kunststoffen.

Es ist ebenfalls bekannt und üblich, zur Schaumherstellung zunächst aus den verschiedenen Einsatzstoffen sogenannte Vormischungen herzustellen, die dann mit dem Isocyanat zur Reaktion gebracht werden. Zur Herstellung der Vormischung werden Polyole oder Polyether, Treibmittel, Katalysatoren und gegebenenfalls weitere Additive in den benötigten Mengen miteinander vermischt. Die Schäume werden dann durch Inkontakt-bringen der Vormischung mit dem Isocyanat bzw. Isocyanaten hergestellt.

Werden Vormischungen unter Verwendung von den genannten Treibmittelmischungen hergestellt, kann es bei Überschreitung einer kritischen Treibmittelmenge überraschenderweise dazu kommen, dass das gesamte System aufgrund des niedrigen Flammpunktes als brennbar einzustufen ist, obwohl Treibmittelmischung und Polyolsystem für sich nicht brennbar sind.

Die Aufgabe der Erfindung besteht darin, die Verwendung einer nichtbrennbaren, stabilen Vormischung zur Herstellung von Schaumstoffen bereitzustellen, die auch bei einem Treibmittelanteil von mehr als 4 Gew.- % im System keinen Flamm punkt aufweisen.

Die Erfindung betrifft die Verwendung zur Schaumherstellung einer nichtbrennbaren Vormischungen bestehen aus
a) Polyetherpolyole und/oder Polyesterpolyole,
b) 4 bis 35 Gew.- %, vorzugsweise 10 bis 15 Gew.- % einer binaren Treibmittelmischung, wobei die Treibmittelmischung neben HFC365mfc 1,1,1,2-Tetrafluorethan, 1,1,1,2,3,3,3-Heptafluorpropan oder 1,1,1,3,3-Pentafluorpropan enthält, wobei vorzugsweise mindestens 5 Gew.- %, vorzugsweise 7 Gew.-% HFC134a, HFC227ea oder HFC245fa enthalten sind, und
c) 10 bis 20 Gew.- %, vorzugsweise 10 bis 15 Gew.- % einer Phosphorverbindung ausgewählt aus Triethylphosphat oder Tris-chlorisopropylphosphat, beinhaltend Lagerung und Transport der Vormischung.

Der Vormischung werden in bekannter Art und Weise weitere Zusatzstoffe wie z. B. Katalysator, Stabilisator und weitere Additive zugemischt.

Die Vormischung wird in bekannter Art und Weise mit dem Isocyanat bzw. Isocyanaten in Kontakt gebracht und verschäumt.

Zur Herstellung der Polyurethanschäume werden üblicherweise Polyisocyanate beispielsweise mit 2 bis 4 Isocyanat-gruppen eingesetzt, Ihre Herstellung und die dafür verwendbaren Grundchemikalien sind bekannt.

Diese Isocyanate weisen einen aliphatischen Kohlenwasserstoffrest mit bis zu 18 C-Atomen, einen cycloaliphatischen Kohlenwasserstoffrest mit bis zu 15 C-Atomen, einen aromatischen Kohlenwasserstoffrest mit 6 bis 15 C-Atomen oder einen araliphatischen Kohlenwasserstoffrest mit 8 bis 15 C-Atomen auf. Technisch besonders bevorzugte Ausgangskomponenten sind beispielsweise 2,4- und 2,6-Toluylendiisocyanat, Diphenylmethandiisocyanat, Polymethylenpolyphenylisocyanat und deren Mischungen. Es können auch sogenannte modifizierte Polyisocyanate eingesetzt werden, welche Carbodiimidgruppen, Urethangruppen, Alophanatgruppen, Isocyanoratgruppen, Harnstoffgruppen oder Biuretgruppen enthalten.

Weitere Ausgangskomponenten sind Verbindungen mit mindestens 2 gegenüber Isocyanaten reaktionsfähigen Wasserstoffatomen. Es handelt sich insbesondere um Verbindungen mit einem Molekulargewicht von 400 bis 10.000, welche vorzugsweise 2 bis 8 Hydroxylgruppen aufweisen und außerdem Aminogruppen, Thiolgruppen oder Carboxylgruppen aufweisen können.

Als weitere Hilfs- und Zusatzmittel kann man dem zu verschäumenden System zusätzlich chemische Treibmittel wie Wasser einsetzen. Einsetzbar sind auch Katalysatoren wie beispielsweise tertiäre Amine, wie Dimethylcyclohexylamin, und/oder organische Metallverbindungen. Es können oberflächenaktive Zusatzstoffe wie Emulgatoren oder Schaumstabilisatoren, beispielsweise Siloxanpolyetherkopolymere eingesetzt werden, Reaktionsverzögerer, Zellregler wie Paraffine, Fettalkohole oder Dimethylpolysiloxane, Pigmente und Farbstoffe. Einsetzbar sind weiterhin Stabilisatoren gegen Alterungs- und Witterungseinflüsse, Füllstoffe, Farbstoffe, Antistatika, Nukleisierungsmittel, Porenreglersubstanzen oder Biocid-wirksame Wirkstoffe.

Gut geeignete Katalysatoren sind beispielsweise in der internationalen Patentanmeldung WO 96/14354 genannt. Dazu zählen organische Amine, Aminoalkohole und Aminoether wie Morpholinverbindungen, beispielsweise Dimethylcyclohexylamin, Diethanolamin, 2-Dimethylaminoethyl-3-dimethylaminopropylether, 2-Dimethylaminoethylether, 2,2-Dimorpholinodiethylether, N,N-Dimethylaminoethylmorpholin, N-Dimethylmorpholin. Auch metallorganische Verbindungen wie beispielsweise Zinn-, Kobalt- oder Eisenverbindungen sind brauchbar als Katalysator. Einsetzbar ist beispielsweise Zinndioctoat, Kobaltnaphthenat, Dibutylzinndilaurat und Eisenacetonylacetat.

Durch die Zugabe von Triethylphosphat, oder Tris-chlorisopropylphosphat wird offensichtlich das Lö- severhalten der Komponenten modifiziert wird, so dass der Flammpunkt sich erhöht und die Einstufung "brennbar" entfällt. Somit ist eine einfache Lagerung und Transport der Vormischung möglich.

### Beispiel 1:

Polyetherpolyol (Tercarol A350) wurde mit 10 Gew.- % Treibmittel (bezogen auf Polyol) gemischt und der Flammpunkt bestimmt. Als Treibmittel wurde ein binares Gemisch aus 94 % HFC 365mfc und 6 Gew.- % HFC 227ea verwendet.
Flammpunkt nach DIN EN ISO 3736: 15°C

### Beispiele 2 bis 5:

Eine Vormischung wurde analog Beispiel 1 aus Polyetherpolyol (Tercarol A350) und 10 Gew.- % binäres Treibmittelgemisch hergestellt sowie zusätzlich Triethylphosphat (TEP) oder Trischlorisopropylphosphat (TCPP) hinzu- gefügt. Der Flammpunkt wurde nach DIN EN ISO 13763 bestimmt. Es konnte kein Flammpunkt ermittelt werden.

**Tabelle1**

| **Beispiele** | **Treibmittelgemisch** | **Verhaltnis** | **Phosphorverbindung** |
|---|---|---|---|
| 2 | HFC 365mfc/HFC 227ea | 94:6 | 10 Gew.-% TEP |
| 3 | HFC 365mfc/HFC 227ea | 94:6 | 13 Gew.-% TCCP |
| 4 | HFC 365mfc/HFC 134a | 93:7 | 15 Gew.-% TEP |
| 5 | HFC 365mfc/HFC 245fa | 75:25 | 10 Gew.-% TEP |

## Patentansprüche

1. Verwendung zur Herstellung von Schaumprodukten einer nichtbrennbaren Vormischung bestehend aus Polyetherpolyol und/oder Polyesterpolyol, 4 bis 35 Gew.- % einer binären Treibmittelmischung aus a) 1,1,1,3,3-Pentafluorbutan und b) 1,1,1,2-Tetrafluorethan, 1,1,1,2,3,3,3-Heptafluorpropan oder 1,1,1,3,3-Pentafluorpropan und 10 bis 20 Gew.- % einer Phosphorverbindung ausgewählt aus Triethylphosphat oder Tris-chlorisopropylphosphat sowie gewünschtenfalls Zusatzstoffen wie Katalysator, Stabilisator und weiteren Additiven, beinhaltend Lagerung und Transport der Vormischung.

2. Verwendung nach Anspruch 1, wobei die nichtbrennbare Vormischung 10 bis 15 Gew.- % binäres Treibmittelgemisch enthält.

3. Verwendung nach Anspruch 1 oder 2, wobei die nichtbrennbare Vormischung 10 bis 15 Gew.- % der Phosphorverbindung enthält.

4. Verwendung nach einem der Ansprüche 1, 2 oder 3, wobei die nichtbrennbare Vormischung aus Polyetherpolyol und/oder Polyesterpolyol,
4 bis 35 Gew.- % einer binären Treibmittelmischung aus a)
1,1,1,3,3-Pentafluorbutan und b) 1,1,1,2-Tetrafluorethan,
1,1,1,2,3,3,3-Heptafluorpropan oder 1,1,1,3,3-Pentafluorpropan,
10 bis 20 Gew.- % einer Phosphorverbindung und Zusatzstoffen wie Katalysator, Stabilisator und weiteren Additiven besteht.

## Claims

1. Use for production of foamed products of a non-combustible premix, consisting of polyether polyol and/or polyester polyol, 4 to 35% by weight of a binary blowing-agent mixture of a) 1,1,1,3,3-pentafluorobutane and b) 1,1,1,2-tetrafluoroethane, 1,1,1,2,3,3,3-hepta-fluoropropane or 1,1,1,3,3-pentafluoropropane and 10 to 20% by weight of a phosphorus compound selected from triethyl phosphate and trischloroisopropyl phosphate and also, if desired, admixtures such as catalyst, stabilizer and further additives, including storage and transport of the premix.

2. Use according to Claim 1, wherein the non-combustible premix contains 10 to 15% by weight of binary blowing-agent mixture.

3. Use according to Claim 1 or 2, wherein the non-combustible premix contains 10 to 15% by weight of the phosphorus compound.

4. Use according to one of Claims 1, 2 and 3, wherein the non-combustible premix consists of polyether polyol and/or polyester polyol, 4 to 35% by weight of a binary blowing-agent mixture of a) 1,1,1,3,3-pentafluorobutane and b) 1,1,1,2-tetrafluoroethane, 1,1,1,2,3,3,3-hepta-fluoropropane or 1,1,1,3,3-pentafluoropropane and 10 to 20% by weight of a phosphorus compound and admixtures such as catalyst, stabilizer and further additives.

## Revendications

1. Utilisation pour la production de produits alvéolaires d'un prémélange non combustible, constitué de polyol de polyéther et/ou de polyol de polyester, de 4 à 35 % en poids d'un mélange propulseur binaire de a) 1,1,1,3,3-pentafluorobutane et b) 1,1,1,2,-tétrafluoroéthane, 1,1,1,2,3,3,3-heptafluoropropane ou 1,1,1,3,3-pentafluoropropane, et de 10 à 20 % en poids d'un composé phosphoré choisi parmi le triéthyl-phosphate et le trischloroisopropylphosphate ainsi que, si on le souhaite, d'additifs tels qu'un catalyseur, un agent stabilisateur et des additifs supplémentaires, comportant le stockage et le transport du prémélange.

2. Utilisation selon la revendication 1, dans laquelle le prémélange non combustible comprend de 10 à 15 % en poids d'un mélange propulseur binaire.

3. Utilisation selon la revendication 1 ou 2, dans laquelle le prémélange non combustible comprend de 10 à 15 % en poids du composé phosphoré.

4. Utilisation selon l'une des revendications 1, 2 et 3, dans laquelle le prémélange non combustible est constitué de polyol de polyéther et/ou de polyol de polyester, de 4 à 35 % en poids d'un mélange propulseur binaire de a) 1,1,1,3,3-pentafluoro-butane et b) 1,1,1,2-tétrafluoroéthane, 1,1,1,2,3,3,3-heptafluoropropane ou 1,1,1,3,3-pentafluoropropane, et de 10 à 20 % en poids d'un composé phosphoré, et d'additifs tels qu'un catalyseur, un agent stabilisateur et des additifs supplémentaires.
